# EUROPEAN PATENT APPLICATION

(11) **EP 4 134 269 A1**
(43) Date of publication of application: **15.02.2023**
(21) Application number: 21191079.9
(22) Date of filing: 12.08.2021
(51) Int. Cl.: B60L 58/22, B60L 50/60

(54) **POWER DISTRIBUTION SYSTEM FOR AN ELECTRIC AIR VEHICLE**

(71) Applicant: Lilium eAircraft GmbH, 82234 Wessling (DE)
(72) Inventor: MAUNOURY, Patrice, 80339 München (DE)
(74) Representative: Grünecker Patent- und Rechtsanwälte PartG mbB

(57) **Abstract**

The present invention relates to a power distribution system for an electric aircraft having an electrical network with plural sub-networks each including energy storage modules and propulsion modules. Two of the sub-networks may be connected at any time for reasons of charge balancing, while preventing a direct energy flow between energy storage modules included in different sub-networks. In addition, the connection between different sub-networks may be used to compensate for failure in an energy storage module.

## Description

### FIELD OF THE INVENTION

The present invention relates to power distribution systems for air vehicles with electrical propulsion. More specifically, the present invention relates to power distribution systems which allow for simultaneous electrical propulsion and state of charge (SoC) balancing in an electrical energy storage system (ESS).

### BACKGROUND ART

In recent years, electricity has gained increasing importance as a form of energy for driving air vehicles. This includes, in particular, electric aircrafts with vertical take-off and landing functionality (eVTOL).

A crucial component for aircrafts with electrical propulsion (i.e. electrically driven/electrically propelled aircrafts sometimes shortly called "electric aircrafts"), including eVTOL, is an appropriate energy storage system (ESS). The energy storage system may be realized in the form of a battery system of chargeable batteries having a modular structure including plural energy storage modules each of which may have plural energy storage sub-modules, which may be further structured into a plurality of individual battery cells. Examples of a battery type suitable for use in the framework of the present invention are Lithium (Li) ion batteries, without the present invention being limited to this.

Generally speaking, the function of the energy storage system is to provide an electrically driven aircraft with sufficient accessible energy for safe flight and landing. As this is generally the case with respect to air traffic, the highest safety standards are applicable to the components of air vehicles, including the ESS. In order to ensure safe operation and, in particular, safe landing with the sufficient amount of remaining accessible energy, parameters of the ESS defining critical states that limit the amount of accessible energy must be monitored and communicated to an operator.

For safety reasons, in aircraft systems it is common to have several (at least two) of each of the systems that are essential for safe flight in order to be able to provide a backup. This concerns, in particular, also the energy storage system (battery system), which includes at least two (usually identical) energy storage modules. Since, further for safety reasons, always a module having the lowest resources (lowest available amount of energy, i.e. the lowest state of charge) is taken as a basis for determining the available flight range, it is further desirable to minimize or at least reduce any unbalancing that may occur between individual ESS modules (preferably even between several sub-modules within a single ESS module). Otherwise, it might be necessary to abort an ongoing transport mission because of the too low-level of an energy storage module, whereas the others are still sufficiently charged. The modules of the energy storage system may not have the same level of stored energy during the flight mission because their load demand may be different and even if identical, their battery characteristics (such as temperature, cells performances within the specified range, ageing) difference, even if slight, will lead to energy level sensitive difference after a certain time.

A possible solution could be to interconnect directly the energy storage battery modules between them to achieve the energy level balancing. It would have two major drawbacks: Firstly, the level of current is uncontrolled and high when two power sources with different level of voltage are thus connected (and indeed with the existing battery technology different level of energy means different level of voltage). This could lead to an overcurrent for which the distribution line is not sufficiently sized and that the battery itself shall withstand. Secondly, it would be a competition in the power flow from one battery to another and from the battery system to the propulsion modules in disfavor of the propulsion system, meaning it would reduce the available power capability from battery to the propulsion system during the balancing and raise the question of the safe operation with such limitation even if temporary.

On the other hand, in order to guarantee uninterrupted power supply for propulsion, it is necessary to arrange any system or device for achieving the energy balancing in such a way that energy balancing is achieved simultaneously with the power supply to the propulsion system.

Further, it is to be noted that it should be possible to segregate modules of an electric network in an air vehicle, since full loss of the electric network will lead to a catastrophic event in aviation, contrary to other technical fields where vehicles are electrically driven, such as in the automotive or railway industries. A single network with electrical storage and electrical propulsion systems demands additional systems for additional redundancy to comply with the safety requirement that no signal failures will lead to the loss of the network that would be a catastrophic event with this single network architecture.

An apparent solution for the redundancy (backup) problem may be to have a complete second energy system for the purpose of backing up a first energy system only (i.e. that would be connected only in the event of a failure of the first one; a so-called cold backup concept). However, for weight and volume constraints in aviation such a solution is of limited value in the aviation industry only. The backup of one network by another, as a cold backup has a high weight and volume cost for a commercial aircraft, reducing its payload and further has the point of a possible failure of the second network, kept and used as a backup.

### SUMMARY OF THE INVENTION

The present invention has been made to address the above identified problem and aims to provide a power distribution system for an aircraft with electrical propulsion having the capability of balancing the level of electrical energy stored between modules of an electric energy storage system of the aircraft and to achieve this energy balancing simultaneously with a power supply to the propulsion system of the aircraft, and a respective method.

This is achieved by the features of the independent claims.

According to a first aspect of the present invention, a power distribution system for an aircraft with electrical propulsion for achieving charge balancing between energy storage modules of an energy storage system simultaneously with power supply to the propulsion engines of the aircraft is provided. The system comprises at least two power distribution modules. Each power distribution module is configured for establishing a switchable connection between a corresponding one of at least two energy storage modules and a corresponding one of at least two propulsion modules via the power distribution module, so that there is a unique correspondence between a power distribution module, an energy storage module and a propulsion module, respectively. The propulsion modules include the propulsion engines. The system further comprises at least two monitor devices corresponding to the at least two power distribution modules, respectively, for monitoring a state of charge of the corresponding energy storage module. Further, the system comprises at least one charge balancing module for establishing a switchable connection between two power distribution modules associated with the charge balancing module. The charge balancing module is associated with exactly two power distribution modules. Still further, the system comprises a network management device communicatively coupled to the monitor devices, for controlling the power distribution modules and the charge balancing modules to connect and disconnect the respective switchable connections. The network management device is configured to, in case of a difference of state of charge between two energy storage modules corresponding to two power distribution modules associated with a common charge balancing module exceeding a predetermined threshold, control the two power distribution modules and the associated charge balancing module in such a way that power supply from the energy storage module having the higher state of charge to the propulsion module corresponding to the energy storage module having the lower state of charge is enabled, but direct power flow from the energy storage module with the higher state of charge to the energy storage module with the lower state of charge is prevented.

According to a second aspect of the present invention, a power distribution method for a power distribution system of an aircraft with electrical propulsion for achieving charge balancing between energy storage modules of an energy storage system simultaneously with power supply to the propulsion engines of the aircraft is provided. The power distribution system includes at least two power distribution modules. Each power distribution module is configured for establishing a switchable connection with a corresponding one of at least two energy storage modules and a corresponding one of at least two propulsion modules via the power distribution module, so that there is a unique correspondence between a power distribution module, an energy storage module and a propulsion module, respectively. The propulsion modules include the propulsion engines. The power distribution system further includes at least one charge balancing module for establishing a switchable connection between two power distribution modules associated with the charge balancing module. Each charge balancing module is associated with exactly two power distribution modules. The method comprises the step of monitoring the state of charge of the energy storage modules. The method further comprises the step of controlling the power distribution modules and the charge balancing modules in such a way that, in case of a difference of state of charge between two energy storage modules corresponding to two power distribution modules associated with the common charge balancing module exceeding a predetermined threshold, power supply from the energy storage module having the higher state of charge of the propulsion module corresponding to the energy storage module having the lower state of chart is enabled, but a direct power flow from the energy storage module with the higher state of charge of the energy storage module with the lower state of charge is prevented.

It is the particular approach of the present invention to achieve energy balancing without the need for an active control, by reducing the power demand on an electrical energy storage module with a lower state-of-charge and increasing simultaneously the power provided by an energy storage module with a higher state-of-charge. This is achieved by temporarily cross-connecting the electrical energy storage module with the higher state-of-charge to a propulsion module corresponding to the energy storage module with the lower state-of-charge, from which it is normally segregated, by means of a charge balancing module. At the same time, a significant cross flow from one energy storage module to another is prevented, in order not decrease the available power for propulsion and guarantee uninterrupted power supply. In other words, this prevents competition between the cross-power flow from one energy storage to another and the power flow to the propulsion system that would limit the power level available for the propulsion.

According to embodiments, the network management devices are further configured to control a charge balancing module and the two associated power distribution modules so as to enable uninterrupted power supply to both the corresponding propulsion modules for the energy storage module corresponding to one of the power distribution modules, if there is a failure in the energy storage module corresponding to the other power distribution module. Hence, the charge balancing module according to embodiments has the additional benefit of compensating for a loss (complete or partial) of one of a plurality of energy storage modules.

In accordance with embodiments, the different power distribution modules are normally disconnected (segregated), unless the state of charge balancing becomes necessary between two energy storage modules due to the state of charge difference exceeding the predetermined threshold or an energy storage module fails. The normally segregated state between each of the electric network portions comprising an energy storage module, a power distribution module and a propulsion module, respectively, serves for preventing a single point of failure of the whole aircraft propulsion, which might occur if all these systems were electrically interconnected.

In embodiments, the control of the power distribution modules and the associated charge balancing module for enabling power supply from the energy storage module having a higher state-of-charge to the propulsion module corresponding to the energy storage module having the lower state-of-charge leads to the charge balancing between the two energy storage modules without active control, by increasing the power flow from the energy storage module with the higher state-of-charge and decreasing the power flow from the energy storage module with the lower state-of-charge.

In embodiments where there are at least three power distribution modules, the arrangement is preferably made such that no more than two power distribution modules are connected at any one time. This enables keeping robust power supply segregation, versus an electrical fault. A lack of segregation would mean that, for instance, every load would be connected to every source, which would be less robust versus electrical fault and increase the protection complexity.

More specifically, after connecting two power distribution modules by the associated charge balancing module for a state of charge balancing, the network management device controls the associated charge balancing module to disconnect the connection between the power distribution modules as soon as a sufficient state of charge balancing between the corresponding energy storage modules is achieved, in order to enable charge balancing between two other energy storage modules.

According to embodiments, a propulsion module comprises plural propulsion sub-modules and the corresponding power distribution module is further configured to receive power regenerated by a propulsion sub-module and to redistribute the regenerated power to another propulsion sub-module that still consumes power. In particular, a regeneration of power by a propulsion module (propulsion engine) is possible in the event of the need for a forced brake down of the rotation speed of the respective engine (propeller), during certain flight manoeuvres. In addition, it would also be possible to direct regenerated power to the corresponding energy storage module. At the same time, together with using the regenerated power, any overvoltage due to excess of power is avoided by charging the energy storage module or if possible by distributing the power internally from one propulsion sub-system that regenerates to another that still consumes.

Still further, according to embodiments, the power distribution modules are further configured to receive power regenerated by the corresponding propulsion module and the network management device is further configured to supply the regenerated power to another propulsion module and/or energy storage module corresponding to another power distribution module,. Hence, a cross-distribution of regenerated power via a charge balancing module is enabled as well. The distribution modules are configured in a way that enable the distribution of the regenerated energy, in operation without balancing. During balancing, the distribution module and the balancing module are configured in a way that enables power regeneration flow from any propulsion module to at least one energy storage module or and one other propulsion module, as consumer of this regenerated power flow.

Moreover, when using electrical propulsion engines in aircraft, phase of power regeneration from the engine may be needed, in particular to handle specific flight manoeuver. In such common case, the power flow is reverse, the propulsion engines supplying recharging power to the energy storage system or supplying power to other connected propulsion system not regenerating simultaneously. In such common case, it is necessary to arrange any system to enable this reverse power flow from propulsion regeneration, to prevent overvoltage that would occur otherwise.

According to embodiments, a power distribution module comprises an electrical device such as a diode for allowing power flow only in a single direction and a plurality of switches for connecting and disconnecting branches of the aircraft electrical network, in particular the corresponding energy storage module and propulsion module. Further, in embodiments, in the power distribution modules there may be an electrical device such as a bus bar or electrical harness that connects the switches to the rest of the electrical network.

In embodiments, a charge balancing module comprises a plurality of switches for connecting branches of the aircraft electrical network including the associated power distribution modules. Further, in embodiments, in the charge balancing modules there may be an electrical device such as a bus bar or electrical harness that connects the switches to the rest of the electrical network as well.

In accordance with embodiments, an energy storage module may include plural energy storage sub-modules and the corresponding monitor device may be further adapted to monitor the state-of-charge of the individual energy storage sub-modules. The modularity of the sub-modules drives two factors. As factor number one, having two or more sub-modules enables the regeneration mode as a normal operation mode, whatever the balancing status is: during balancing phase, or out of balancing phase. As factor number two, the number of sub-modules, and the corresponding frame of the power distribution modules, drives the power flow distribution during the balance. If the ESS module is not split into sub-modules, during the balancing, the power flow of one ESS will be 200% and the power flow of the other one 0% relatively to nominal power flow. If the ESS modules are split in two sub-modules with the distribution module framed accordingly, the power flow of one ESS will be increase to 150% and the other one decrease to 50% of their nominal values. If the ESS modules are split in three sub-modules with distribution modules framed accordingly, the ratio will be 133% and 67%. Moreover, the corresponding power distribution module may be further configured to supply more power, from an energy storage sub module with a higher state-of-charge than from an energy storage sub-module with a lower state-of-charge, when the direct power flow between them is stopped during the balancing phase and when information is received from the corresponding monitor device that a state-of-charge difference between two energy storage sub-modules exceeds a predetermined threshold. In other words, charge balancing is also possible within a single energy storage module, between sub-modules.

As will be detailed below, this may, for instance, be caused by the concept of energy balancing between energy storage modules according to the present invention.

During the charge balancing, in order to prevent the direct power flow from the energy storage module with the highest state of charge to the energy storage module with the lowest state of charge, the distribution module is configured in such a way that enables power flow unbalance among the sub-modules of the energy storage module with the lowest state of charge, meaning that the state of charge of each of these sub-modules is allowed to be different (which is not the case out of the balancing charge sequence).

This unbalance of power flow may be caused by a parasitic power flow from one sub-module of the energy storage module to one of the sub-module of the propulsion module. This power flow is defined as parasitic because it is very low compared to the main power flow, which is driven by the voltage difference between the energy storage modules.

With the state of the art of energy storage modules, the voltage of the module as electrical power source is driven by their state of charge. The balancing is triggered when the difference of state of charge between two energy storage modules exceed a predefined threshold, so implicitly with a corresponding difference of voltage between the two considered energy storage modules.

This difference of voltage drives the power flow to the propulsion module when, during the charge balancing, it is connected to several energy storage sub-modules with different voltage levels. Thus, the energy storage sub-modules with the highest state of charge theoretically provide the complete power flow demanded by the propulsion systems.

However, such parasitic power flow may occur because of abnormal impedance of the distribution lines or modules, that will affect the voltage difference, or because of failure of the balancing control system that would have kept the connection between two energy storage modules even when the difference would have reached a level below a predefined second threshold, with quasi the same level of energy.

That is why the described system has the capability to solve a possible unbalance of state of charge between two sub-modules of the same energy storage module at the end of a first phase of charge balancing with another energy storage module.

When such unbalance between two sub-modules of one energy storage module occurs because of balancing, and when the balancing module disconnect the two energy storage modules, the power distribution module corresponding to the rebalanced energy storage modules is configured in a way that increases the power flow from the energy storage sub-module with the highest state of charge and one propulsion sub-module and decreases the power flow from the energy storage sub-module with the lowest state of charge and another propulsion sub-module.

More specifically, in the event that the propulsion module corresponding to the energy storage module with plural sub-modules comprises a plurality of propulsion sub-modules as well, for achieving the charge balancing between the energy storage sub-modules, the power distribution module is controlled to inhibit power flow from the energy storage sub-module with the lower state-of-charge to a part of the propulsion sub-modules. For instance, if there are only two propulsion sub-modules associated with an energy storage module comprising two energy storage sub-modules, an energy storage sub-module with the lower state of charge may be used for providing power supply only to one of the two propulsion sub-modules, whereas the other energy storage sub-module supplies power to both propulsion sub-modules. Thereby, the power flow from the sub-module with the lower state-of-charge can be reduced so as to achieve the charge balance with the second energy storage sub-module.

In accordance with a further particular aspect of the present invention, an aircraft electrical network including the power distribution system according to the first aspect of the present invention and its embodiments, the at least two energy storage modules and the at least two propulsion modules is provided.

In accordance with a still further particular aspect of the present invention, an aircraft comprising an aircraft electrical network according to the above further particular aspect is provided.

In embodiments, the aircraft is an electric vertical take-off and landing aircraft, eVTOL.

Further features and advantages of the present invention are set forth in dependent claims.

Embodiments and features of the present invention herein described or set forth in the appended claims may be combined unless it is obvious from the context that such a combination is not possible for particular embodiments or features.

### BRIEF DESCRIPTION OF THE DRAWINGS

Additional features and advantages of the present invention will become apparent in the following and more particular description as illustrated in the accompanying drawings, wherein:
- Fig. 1: is an overview over an exemplary electrical network of an aircraft with electrical propulsion including a power distribution system according to embodiments of the present invention, with two power distribution modules and a charge balancing unit in between, and an energy storage system;
- Fig. 2: is an overview over a more extended exemplary electrical network of an aircraft with electrical propulsion including a power distribution system according to embodiments of the present invention, with three power distribution modules and three charge balancing units in between;
- Fig. 3: is a flowchart of an exemplary method according to embodiments of the present invention;
- Fig. 4: including Figs. 4A to 4D illustrates the operation of the exemplary power distribution system shown in Fig. 1 for charge balancing in various stages of operation;
- Fig. 5: including Figs. 5A and 5B provides a schematic illustration of state-of-charge balancing over time, during different SoC phases;
- Fig. 6: is a flowchart illustrating an exemplary method according to embodiments of the present invention including a phase of charge balancing between sub-modules within an energy storage module; and
- Fig. 7: including Figs. 7A and 7B gives an illustration of implementing a backup functionality for an energy storage module experiencing a failure by means of an exemplary power distribution system as shown in Fig. 1.

### DETAILED DESCRIPTION

The following description of particular embodiments serves for a more detailed explanation of the principles underlying the present invention. However, any details provided in the detailed description serve for illustration by means of example only and are not intended to limit the invention that is defined by the appended claims.

The present invention relates to a system for balancing the level of electrical energy stored between modules of an energy storage system (ESS) for an electric aircraft, and for achieving this energy balancing simultaneously with power supply to the propulsion system.

According to the principles of the present invention, electric power is provided from energy storage modules to propulsion modules with an electrical network, wherein this power supply is achieved with segregation between different electrical sub-networks and with redundancy. In the above sense, redundancy is achieved by having a modular structure, wherein each of a plurality of sub-networks includes at least an energy storage module as a part of the overall ESS, a propulsion module including one or a plurality of electrical propulsion engines and a power distribution module. The individual sub-networks are normally segregated from each other and are connectable via switchable connections only if necessary. This is, in particular, the case when charge balancing between different energy storage modules is necessary, or for redundancy reasons in case of failure of an energy storage module. Preferably, a connection of more than two sub-networks is never made at the same time.

It is noted that this principle is different from an alternative possibility, wherein plural sub-networks of an electrical network are in a normally-connected state so as to provide for redundancy and a disconnection between individual models is only effected in the event of need, in particular, due to a failure for safety reasons. From the standpoint of safety, it is, however, considered that the normally-disconnected approach proposed in the present disclosure is preferential.

Further, in accordance with the principles of the present invention, the state of charge of each energy storage module is permanently monitored.

In the event of a too high difference of state-of-charge (SoC) between two energy storage modules (in preferred embodiments: when the difference becomes greater than a predefined first threshold ΔSoC_{theshold 1}), for instance between modules A and B, with SoC(A) > SoC(B), the sub-networks including modules A and B are connected by a dedicated charge balancing unit (charge balancing module) so as to connect the energy storage module A to a propulsion module that is normally supplied only by energy storage module B. Herein, the connection is established by the charge balancing unit in such a way that enables module A to supply power to the propulsion module in the other sub-network but prevents direct power flow from energy storage module A to energy storage module B, across the border of the sub-networks.

As indicated above, the aircraft electrical network is further configured to receive electrical power regenerated by the propulsion system (the propulsion engines) in order to consume this power. At the same time, any overvoltage due to excess of power will be avoided thereby. This is achieved by charging the energy storage module or if possible by distributing internally this power from one propulsion sub-system that regenerates to another one that still consumes. A typical situation where an electrical propulsion engine of an electric aircraft regenerates power is the situation wherein the rotation of the corresponding propeller needs to be subjected to a forced braking process, during certain flight manoeuvres, e.g. when thrust needs to be decreased specifically quickly.

In preferred embodiments, the system according to the present invention is further configured to resolve the state of charge and voltage differences and balance between two interconnected modules of the ESS without any active control or additional device, simply by increasing the power flow from module A and decreasing the power flow for module B. In this way, the difference between the two states of charge is decreased and they can eventually be made close enough to avoid significant impact on the range of the whole aircraft system.

At the same time, in the framework of the present invention, it is possible to keep supplying the required power to the propulsion modules even during the energy balancing, thanks to the absence of any power flow directly between two storage modules.

The presence of the charge balancing modules between each pair of two sub-networks of the electrical network keeps the instantaneous redundancy of the power supply to the propulsion modules.

In preferred embodiments, during ongoing charge balancing between two selected ESS modules, the connection of any other ESS modules one to another is prevented despite the possible SoC unbalance between them, in order to keep a level of segregation between the different electrical networks. Rather, a disconnection of the two selected ESS modules is foreseen as soon as their states-of-charge are balanced enough (in preferred embodiments: when the difference becomes lower than a predefined second threshold ASoC_{threshold 2}), so as to be ready for a state-of-charge balancing between two other modules if needed.

Thus, embodiments of the present invention enable
- balancing the energy levels (states-of-charge) of the energy system, in order not to abort a transport mission because of the too low-level of an energy storage module while the others are still charged enough,
- keeping the full power capability of the energy storage modules, and not completely losing any healthy storage module just because it would be empty of energy before the end of the mission,
- preventing competition between the cross power flow from one energy storage module to another and the power flow to the propulsion system that would limit the power level available for the propulsion, and, at the same time
- segregating the electrical network made of energy storage, power distribution and propulsion systems, in respective electrical sub-networks, in order to prevent a single point failure of the whole aircraft propulsion which might occur if all these sub-networks were electrically interconnected, and
- keeping the ability to consume power regenerated from the propulsion system at any time.

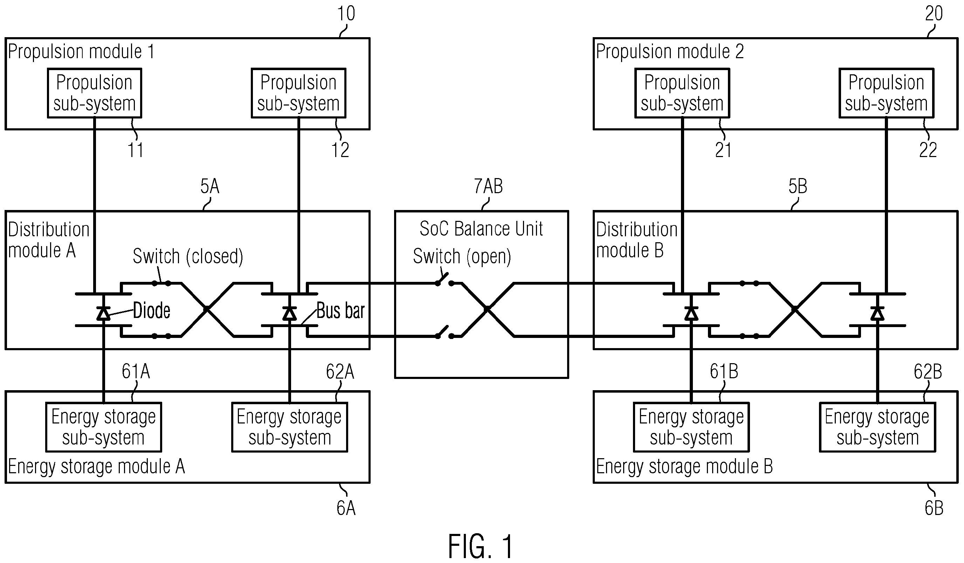

Fig. 1 illustrates a minimal configuration of an electric network of an aircraft with electrical propulsion comprising two sub-networks (illustrated on the left and right hand sides of the drawings, respectively) and a single charge balancing module (SoC balance unit), respectively.

Each of the sub-networks comprises a propulsion module, an energy storage module and a distribution module in between. In the sub-network on the left hand side of the drawing, these are propulsion module 1 (10), energy storage module A (6A) and distribution module A (5A). In the sub-network on the right hand side of the drawing, these are propulsion module 2 (20), energy storage module B (6B) and distribution module B (5B). In between, there is the charge balancing module 7AB for interconnecting the two sub-networks.

As can be further seen from the drawing, each of the power distribution modules comprises an electrical device such as a diode that distributes power flow in a single direction, an electrical device, such as a switch that connects or disconnects branches of the electrical network, and thus load(s) and source(s), and an electrical device such as a bus bar or electrical harness that connects the switches to the rest of the electrical network. Further, in association with each power distribution module there is a monitor device that measures the level of voltage of the module of the energy storage in the respective sub-network and translates the measured level of voltage into the respective state-of-charge based on known physical laws connecting the measured voltage with the SoC. It is noted that the monitor device (not shown in the drawing) can be both incorporated in the respective power distribution module or provided separately therefrom, with the necessary electrical connection to the power distribution module.

The SoC balance module 7AB comprises an electrical device such as a switch that connects or disconnects branches of the electrical network and thus load(s) and/or source(s) and an electrical device such as a bus bar or electrical harness that connects the switches to the rest of the electrical network.

Further, there is at least one network management module (network management device) that is an electronic device that triggers the opening or the closure of the required switches of the power distribution modules and SoC balance module (not shown in the drawing).

The power distribution modules, together with the monitor devices, the charge balancing module, and the network management device form a power distribution system according to embodiments of the present invention.

As can be further seen from the drawing of Fig. 1, each of the propulsion modules 10 and 20 and of the energy storage modules 6A and 6B can comprise respective sub-systems (sub-modules). In the illustrated example, each propulsion module includes two propulsion sub-systems (11 and 12, and 21 and 22, respectively) and each energy storage module comprises two energy storage sub-modules (61A and 62A, and 61B and 62B, respectively). However, the number of possible sub-modules is not limited to the illustrated number of two and other numbers of sub-modules are equally possible, or a situation is in the framework of the present invention, wherein some or all of the respective propulsion modules and energy storage modules do not include sub-modules at all.

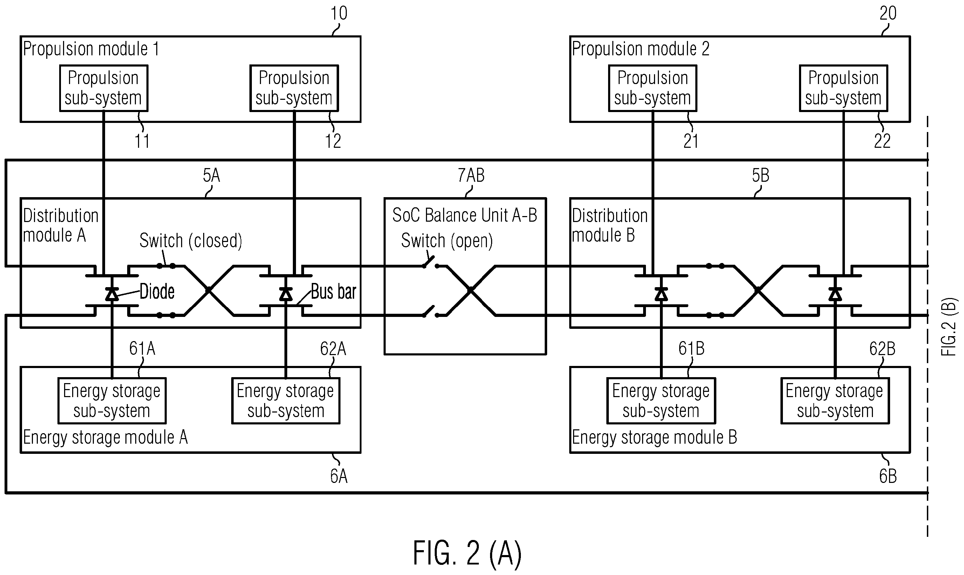

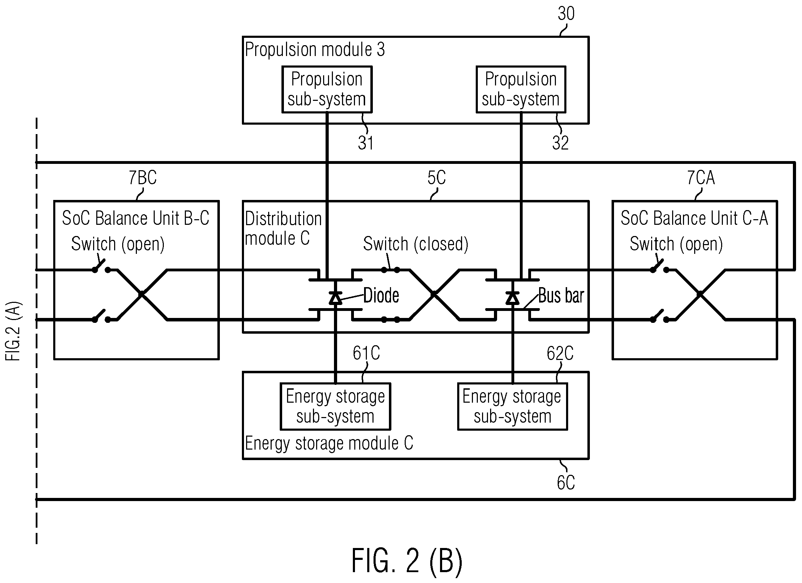

Fig. 2 illustrates a more extended exemplary embodiment of an aircraft electrical network comprising three sub-networks and three charge balancing modules, for connecting pairs of two of the sub-networks respectively. In the illustrated case, these are a first sub-network with propulsion module 1 (10), power distribution module A (5A), and energy storage module A (6A), a second sub-network with propulsion module 2 (20), power distribution module B (5B), and energy storage module B (6B), and a third sub-network with propulsion module 3 (30), power distribution module C (5C), and energy storage module C (6C). The first and the second sub-networks are interconnected in a switchable manner by charge balancing module 7AB, the second and third sub-networks are interconnected in a switchable manner by charge balancing module 7BC, and the third and first sub-networks are interconnected in a switchable manner by charge balancing module 7CA.

The internal structure of each of the illustrated modules is the same as that of Fig. 1 and a repetition of the detailed description thereof is therefore omitted. Again, by way of example only, each of the propulsion modules is illustrated to comprise two propulsion sub-systems (11 and 12, 21 and 22, and 31 and 32, respectively) and each of the energy storage modules is illustrated to comprise two energy storage sub-systems (61A and 62A, 61B and 62B, and 61C and 62C respectively).

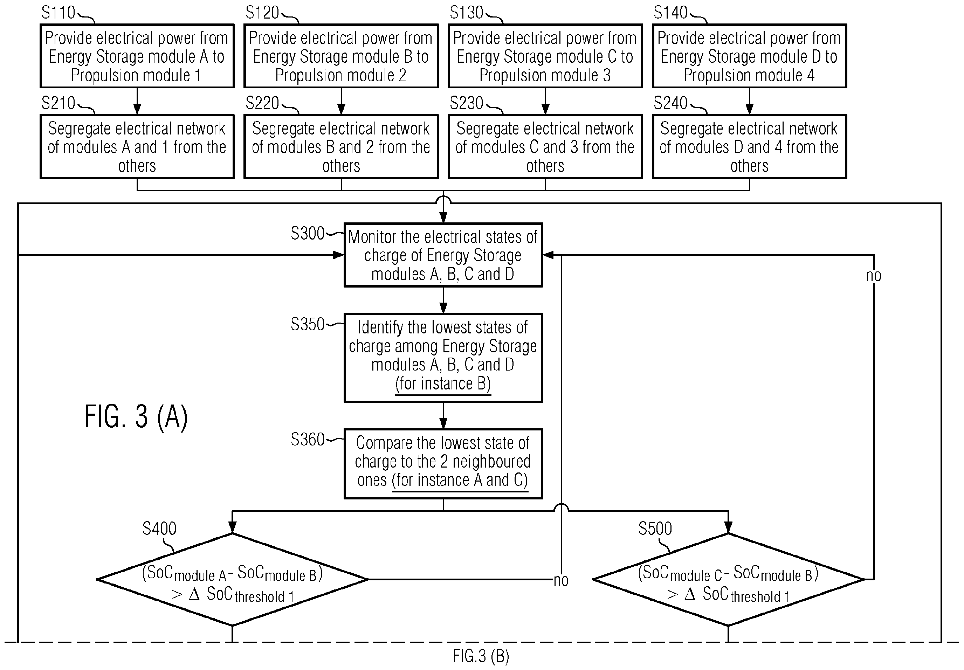

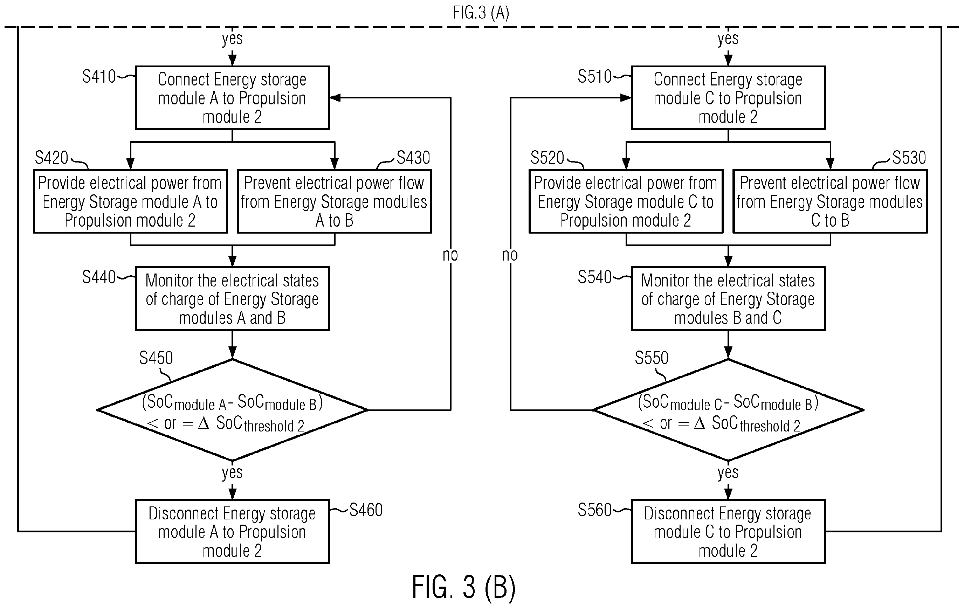

Fig. 3 is a flowchart illustrating an exemplary method according to the present invention. In the given example, it is assumed that the system has the overall network structure similar to that illustrated in Fig. 2, but with four sub-networks.

The method starts with the situation wherein the electrical storage module of each sub-network provides power to the respective associated propulsion module of the same sub-network. This stage is illustrated with steps S110, S120, S130, and S140, respectively.

At this time the individual sub-networks are segregated from each other, as illustrated in the boxes labeled with steps S210, S220, S230, and S240, respectively.

During this stage, the electrical states of charge of each of the energy storage modules are permanently monitored (step S300). By the monitoring among the energy storage modules, the one with the lowest state-of-charge is determined (step S350). In the present case, it is assumed that this is energy storage module B (6B). Subsequently, at step S360, the state of charge of the module having the lowest state of charge is compared with its neighbors (in the present case: modules A and C (6A and 6C)).

In the following steps, S400 and S500, respectively, it is determined for modules A and C, respectively, whether their (positive) SoC difference with module B exceeds a predetermined threshold (first threshold ΔSoC_{threshold 1}). As long as this is not the case, processing returns to step S300, and monitoring of the state-of-charge is continued.

As soon as there is a SoC difference exceeding the first threshold (i.e. there is a sufficiently high unbalancing between the modules) for one of the modules A and C, processing proceeds to subsequent step S410 for module A and S510 for module C, respectively.

In the following, it will be assumed that the condition checked in step S400 is fulfilled for module A. Processing then proceeds to step S410. In step S410, load balancing module 7AB is controlled so as to connect the energy storage module A (6A) to propulsion module 2 (20) of the second sub-network. Thereby, electrical power is provided from energy storage module A to propulsion module 2 across energy balancing module 7AB (S420). At the same time, energy flow from energy storage module A to energy storage module B is prevented by a respective switch operation (S430). At this stage, monitoring of the electrical states of charge of energy storage modules A and B continues (S440). The connection state remains as established at step S410, as long as it is not detected, at step S450, that the state of charge difference between modules A and B is below or equal to a second threshold ASoC_{threshold 2} (lower than the first threshold ASoC_{threshold 1}). As soon as this is the case (S450: yes), energy storage module A is disconnected from propulsion module 2 at step S460 and processing proceeds back to step S300. The opposite case, wherein the connection state between the sub-networks remains, is illustrated by the arrow going from step S450 back to step S410. It is noted that, in case of an energy storage module comprising sub-modules, the average SoC of the sub-modules is preferably used as the SoC for comparison.

The respective case, where the SoC difference between modules C and B exceeds the first predetermined threshold is illustrated in the right-hand side of the drawing. Since the processing is completely analogous, a detailed description thereof is not repeated herein. The steps corresponding to steps S400, S410, S420, S430, S440, S450, and S460, are labeled S500, S510, S520, S530, S540, S550, and S560, respectively.

As further indicated above, it is one of the principles of preferred embodiments of the present invention not to connect more than one pair of two neighboring sub-networks at any time. In order to achieve this, it is necessary to further define how to proceed in the event that the charge difference is larger than the first predetermined threshold for more than one pair of neighboring sub-networks. In the present example, this would, for instance, be the case if at a given time both modules A and C have a difference in SoC with module B exceeding the first threshold, i.e. a situation where both determinations at steps S400 and S500 are to the affirmative. In that case, although both conditions are fulfilled, the respective connection change over the respective charge balancing module can only be made for one of the pairs of sub-networks. A respective decision can be made on the basis of several criteria. For instance, if initially only one (e.g. A) of the neighboring energy storage modules had an SoC difference exceeding the first threshold with respect to module B, and the condition becomes fulfilled for the other one (e.g. C) only later in time, the respective connection change (at step S510) is delayed until the balancing process is finished at step S460 in accordance with the general description given above. Alternatively, in the event that the SoC differences exceeding the first threshold being determined at the same time for both modules A and C, one of them has to be selected for which the charge balancing is performed first, whereas the charge balancing for the other one is delayed. For instance, the module having the higher difference in SoC as compared to the lowest one (i.e. module B in the illustrated example) may be selected to undergo charge balancing first.

In the following, it will be explained why there are two different predetermined thresholds in the illustrated processing of Fig. 3.

The first threshold, ΔSoC_{theshod 1} is defined from the energy management perspective. The goal is to avoid abortion of the mission because of the too low-level of energy in a single energy storage module. The definition of this threshold also considers the time needed to achieve the balancing.

The definition of the second threshold, ASoC_{threshold 2}, is driven by the influence of the line resistance on the balancing operation. The electrical resistance of the line makes a slight voltage drop between the source and the load. The lines are designed as low resistance to properly achieve the power distribution.

During the balancing, the propulsion systems of module 2 are powered by both the energy storage modules B and A.

The cross power flow from energy storage module A to propulsion module 2 is much higher than the direct power flow from energy storage system sub-module 61B to the propulsion sub-module 21 because the voltage level of energy storage module A is higher than the one of energy storage B. This voltage hierarchy drives the power flow distribution.

If the voltage difference between energy storage modules A and B decreases and comes closer to zero, the slight voltage drop difference between the power from ESS module A and the flow from ESS module B will have more and more influence on the power distribution and eventually drive it. The reason is that the power from ESS module B goes through a longer line, so with a higher resistance. To prevent this phenomenon, which is counter-productive from the balancing perspective, a second predetermined SoC threshold for completing the charge balancing should be chosen to be larger than zero. In preferred embodiments, the range of the second threshold ASoC_{threshold 2} is less than 3% of the absolute voltage of ESS storage modules A and B, to limit the inrush current between the two ESS sub-modules occurring at their direct reconnection, when the range of the first threshold ASoC_{threshold 1} is more than 5%, to prevent erroneous balancing because of the monitoring measurement accuracy. In this example, the accuracy of the voltage or SoC monitoring is assumed to be around 2%, defining a minimum value for these SoC thresholds. However, the given ranges are exemplary only and the present invention is not limited to these. In principle, it would also be possible to operate with setting the second predetermined threshold to zero.

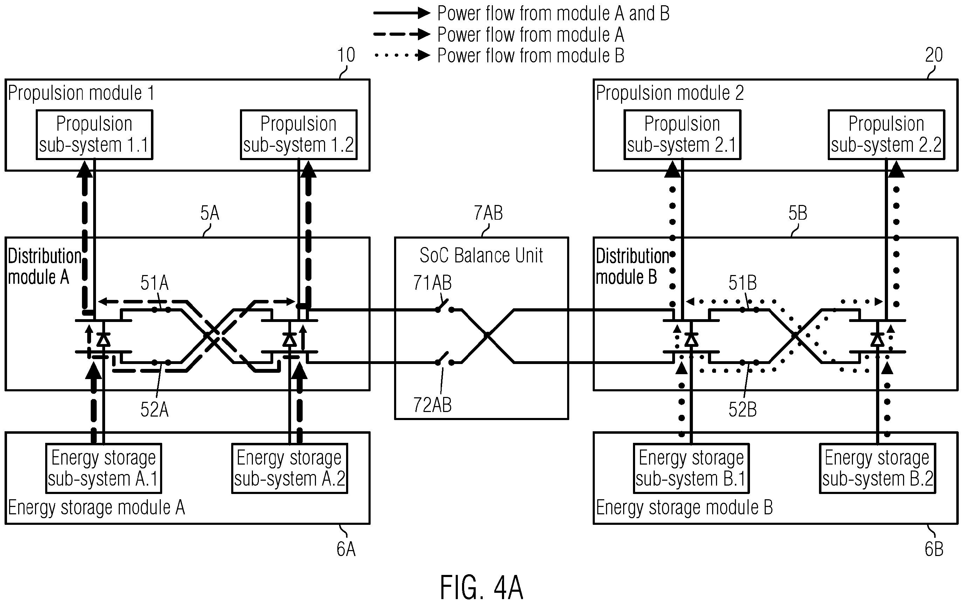

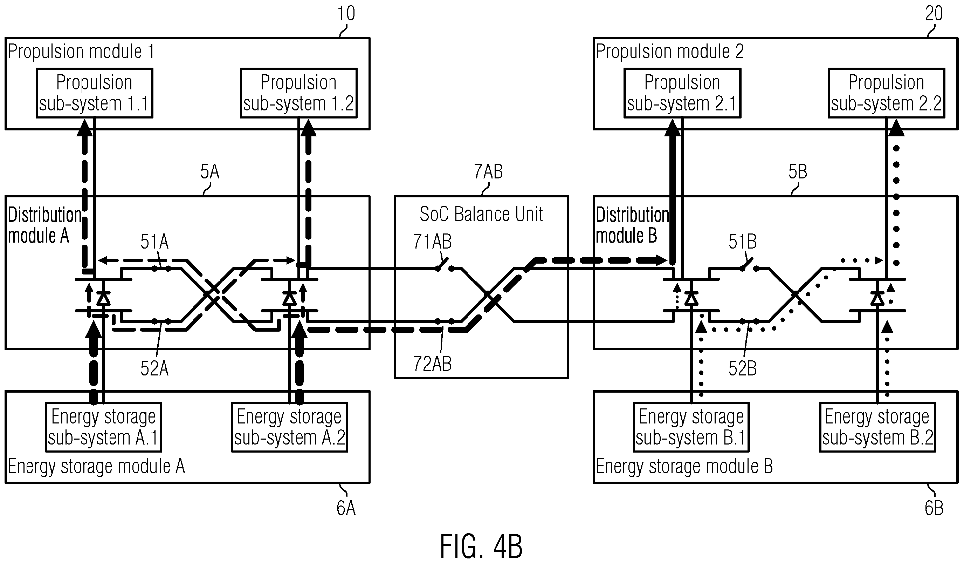

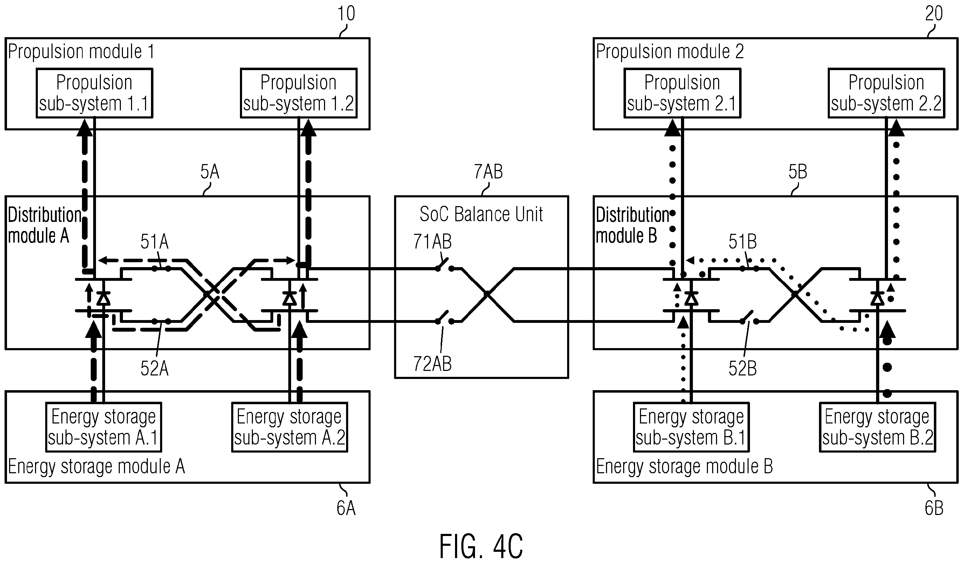

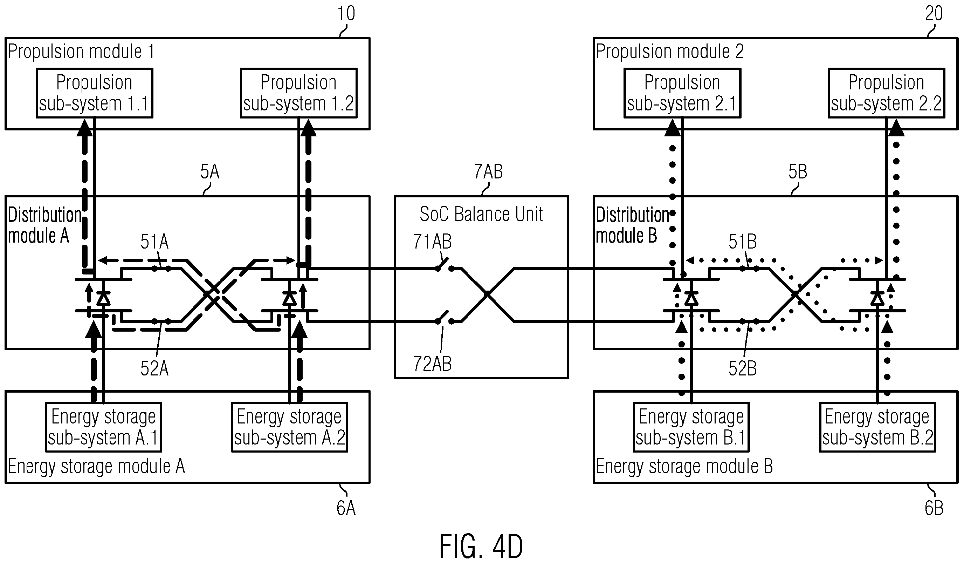

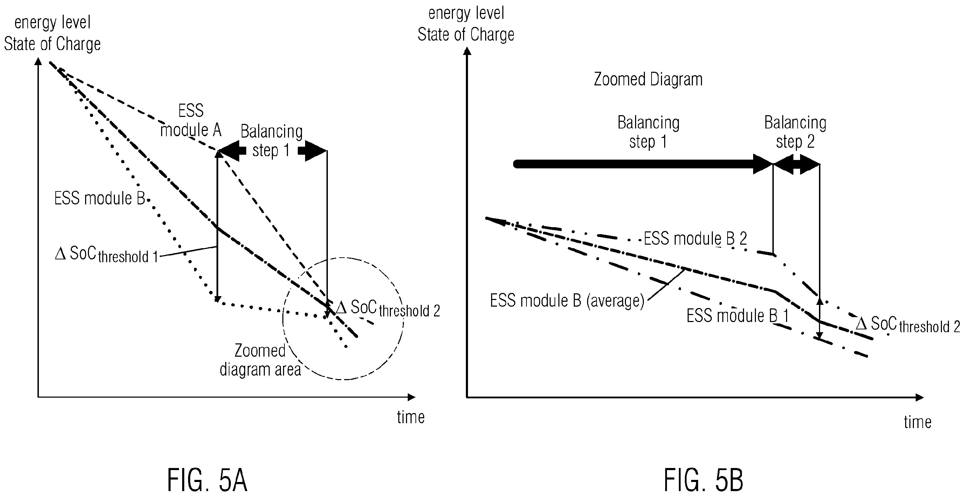

In the following, details of exemplary connection schemes for achieving a balancing such as described above with respect to the flowchart of Fig. 3 will be described with reference to Figs. 4 and 5. For the sake of simplicity, the balancing will be explained for the simple case of a system having only two sub-networks, i.e. as in Fig. 1. This is sufficient in order to explain the principles, because as explained, in an energy balancing operation more than two sub-networks are never involved at the same time. Fig. 4 includes four separate schemes, Figs. 4A to 4D corresponding to different stages of the balancing operation.

In these schemes, a different designation of the sub-modules has been chosen to be indicated within the respective boxes, and the reference numerals are therefore omitted, in order not to overload the drawings. Further, the switches of power distribution modules 5A and 5B and charge balancing unit 7AB are labeled with reference numerals 51A, 52A, 51B, 52B, and 71AB and 72AB, respectively, as indicated in the drawing. Further, at the top of Fig. 4A, a legend is provided explaining the meaning of the individual arrow types used in the drawings. In accordance therewith, a solid arrow designates a power flow from both energy storage modules A and B, a dashed arrow designates a power flow from module A only, and a dotted arrow indicates a power flow from module B only. Further, the thickness of the arrows has been chosen to give a qualitative impression of the amount of power flowing along the respective lines.

Fig. 4A relates to a situation (step 1), when no SoC balancing is necessary. At this stage, in the individual modules the SoC is monitored. Hence, this stage corresponds to steps S110 to S360 of Fig. 3. At this stage, propulsion module 1 (10) gets power supplied by ESS module A (6A) only and propulsion module 2 (20) gets power supplied from ESS module B (6B) only. In accordance therewith, all switches in the charge balancing module 7AB remain open, whereas the respective switches in the power distribution modules are closed.

If at this stage SoC monitoring reveals that the difference between SoC(A) and SoC(B) is higher than the first predetermined threshold, the following step 2 illustrated in Fig. 4B is triggered. For the following description, it is again assumed that SoC(A) > SoC(B) holds true. However, needless to say this is by way of example only.

As illustrated in Fig. 4B, at this stage ("phase 1 of charge balancing") propulsion module 2 (20) is connected to ESS module A (6A) and remains connected to ESS module B (6B). Simultaneously, propulsion sub-module 2.1 remains connected to the ESS module B (6B). This stage corresponds to the processing of steps S400 to S450 in Fig. 3.

The energy balancing is done by dragging more power from ESS module A than from ESS module B. Indeed, ESS module supplies power to three propulsion sub-systems (1.1, 1.2 and 2.1) when ESS module A supplies power to one propulsion sub-system (2.2). This power flow is to compare with the one in the previous phase, before balancing, with each ESS module (A or B) supplying power to two propulsion sub-systems. This comes automatically, i.e. without any active further control, due to the relationship between SoC and voltage.

More specifically, in the given situation, the voltage of ESS module A is higher than the voltage of ESS module B. For this reason, in order to achieve the charge balancing, the switches are controlled so as to control power supply of half of propulsion module 2 (more specifically, propulsion sub-module 2.1) to come from ESS module A and not from ESS module B any longer. For this purpose, switch 51B in power distribution module B is opened, whereas switch 72AB in the charge balancing module is closed. The rest of the switches remain in the same status as in Fig. 4A. This includes, in particular, the other switch in the balancing unit, 71AB. By this, together with the diode in the left-hand side of power distribution module B (5B), a direct, harsh and uncontrolled power flow from ESS module A to ESS module B is prevented. Further details of the balancing processing at this stage will be described below with reference to Fig. 5A.

The following step 3 illustrated in Fig. 4C shows a situation after the charge balancing between ESS modules A and B has been completed, i.e. when this state-of-charge on balance has fallen below the second threshold in step S450.

At this stage, the two sub-networks are disconnected again by opening switch 72AB (step S460).

As a result of the processing illustrated in Fig. 4B, modules A and B are balanced. However, there may be also an internal small unbalance between one half of ESS module B (more specifically: ESS sub-module B.1) and the other (more specifically: ESS sub-module B.2). In particular, as a result of the situation illustrated in Fig. 4B, the state of charge in sub-module B.2 may be slightly higher than that in sub-module B.1. This may come from a possible parasitic (and small) power flow during the previous step between ESS sub-module B.1 and propulsion sub-module 2.1, as explained previously.

At the present stage ("phase 2 of charge balancing"), this internal unbalance is resolved by dragging more power from sub-module B.2 than from sub-module B.1, as illustrated by the respective arrows in the drawings. For this purpose, in power distribution module B, switch 52B is now opened but switch 51B is closed again. As a result, ESS sub-module B.2 provides power to both propulsion sub-modules, whereas ESS sub-module B.1 provides power only to a single one of the propulsion sub-modules (more specifically: propulsion sub-module 2.1).

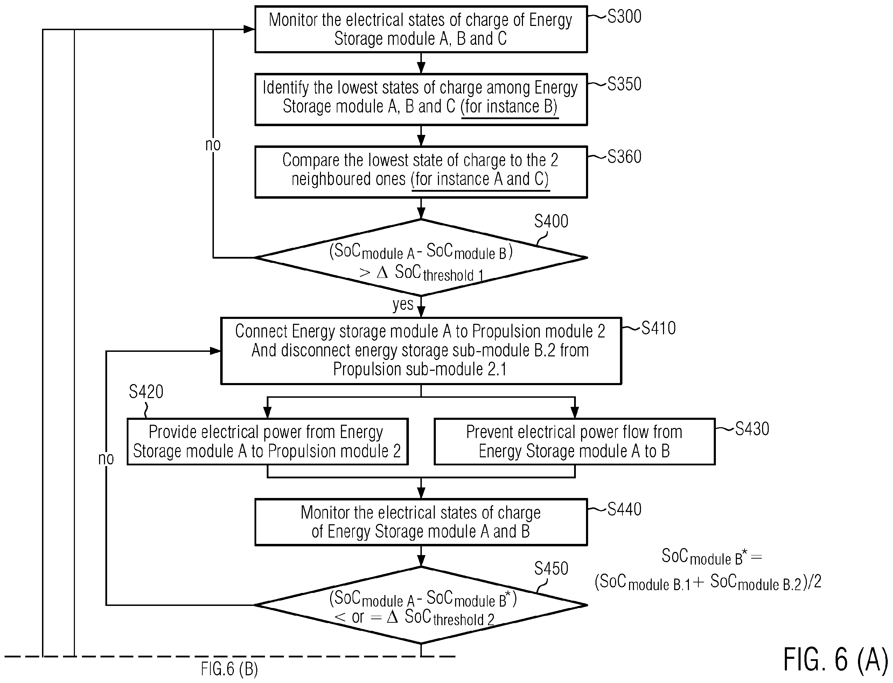

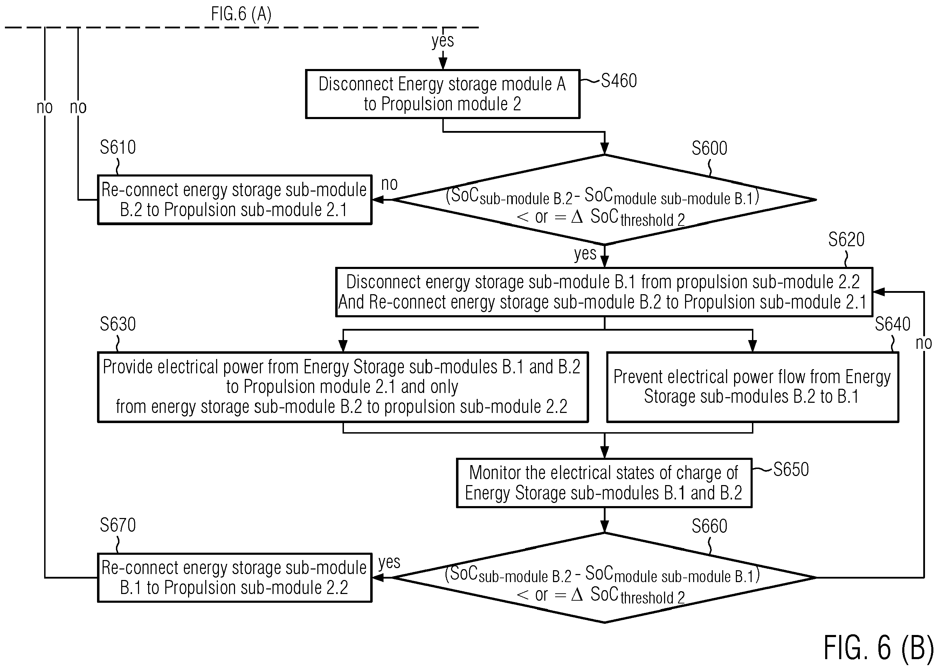

Balancing phase 2 is not shown in the exemplary flowchart of Fig. 3 but will be explained in more detail below with reference to the flowchart of Fig. 6.

Finally, in step 4 illustrated in Fig. 4D, state-of-charge balancing is completely ended and the initial setup with no connection between the sub-networks and full connection within distribution module B of the right-hand side sub-network is restored. The drawing in Fig. 4D therefore corresponds to that in Fig. 4A.

In the following, the processing during the charge balancing phases 1 and 2 illustrated in Figs. 4B and 4C will be explained in more detail with respect to the energy level (SoC) - time-diagrams of Fig. 5A and 5B.

Fig. 5A relates to the charge balancing in phase 1 of Fig. 4B, i.e. between energy storage modules. After reaching or exceeding an unbalance between modules A and B exceeding the first threshold ΔSoC_{threshold 1} at a certain instance of time, the phase 1 balancing reduces the unbalance so as to get below the second threshold ΔSoC_{threshold 2}. This is achieved by increasing the power flow from ESS module A by approximately 50% and decreasing, at the same time, the power flow from ESS module B by approximately 50%. Thus, the concurrent power flow magnitude change of both modules achieves the balancing of the level of energy between the modules. The above indicated percentages specifically apply to the illustrated case of two sub-modules per energy storage module but may differ for other numbers of energy storage modules.

Fig. 5B showing a zoom into the encircled portion of Fig. 5A illustrates the charge balancing in phase 2 of Fig. 4C, i.e. within an energy storage module, between the sub-modules. In this case, the sub-module B.2 retaining a higher energy level during balancing phase 1 gets its power flow increased by approximately 50% and sub-module B.1 having a lower energy level as a result of balancing phase 1 gets its power flow unchanged. Again, the power flow magnitude change achieves the balancing of the level of energy.

Fig. 6 is a flowchart illustrating an exemplary method of charge balancing for a power distribution system, such as illustrated in Fig. 4, wherein there are two energy storage sub-modules in an energy storage module and to propulsion sub-modules in a propulsion module. In particular, Fig. 6 includes the case of internal balancing between sub-modules of an energy storage module that was explained above with reference to Figs. 4C and 5B.

The steps in the upper portion of the drawing, from step S300 to steps S460 corresponds to the respective steps of Fig. 3 and the detailed description thereof is not repeated here. Specifically, as a result of the processing in steps S360 and S400 it is again assumed that a balancing between modules A and B (i.e. those shown in Fig. 4) is initially to be performed. In step S410, the sub-module structure illustrated in Fig. 4 is specifically taken into account by including the description that energy storage sub-module B.2 is disconnected from propulsion sub-module 2.1, as this is illustrated in Fig. 4B. Moreover, as indicated above and shown with respect to step S450 in the drawing, the average SoC of the sub-modules B.1 and B.2 is used as a measure for the SoC of module B (SoC _{module B}*).

The additional processing for internal balancing between the sub-modules of module B as explained above with respect to Fig. 4C corresponds to the processing shown in the loop of steps S620 to S660. Specifically, step S620 is triggered when it is decided in step S600 that that there is an internal unbalance between sub-module B.2 and sub- module B.1 exceeding the second threshold, ΔSoC_{threshold 2} (S600: yes). The check of step S600 is performed after the balancing of phase 1 (between modules A) has been completed and the energy storage module A has been disconnected from propulsion module 2 at step S460. In the opposite case (S600: no), the energy storage sub-module B.2 is re-connected to propulsion sub-module 2.1 and processing proceeds directly from the situation of Fig. 4B to that of Fig. 4D.

When an internal unbalancing between sub-modules B.2 and B.1 has been detected in step S600, in subsequent step S620 energy storage sub-module B.1 is disconnected from propulsion sub-module 2.2 and energy storage sub-module B.2 is re-connected to propulsion sub-module 2.1, so as to achieve the connection situation illustrated in Fig. 4C. Accordingly, as shown in step S630, electrical power from both energy storage sub-modules B.1 and B.2 is provided to propulsion module 2.1 and only from energy storage sub-module B.2 power is provided to propulsion sub-module 2.2. At the same time, as illustrated in step S640, a direct electrical power flow from energy storage sub-module B.2 to energy storage sub-module B.1 is prevented. The electrical states of charge of the energy storage sub-modules B.1 and B.2 are further permanently monitored, as illustrated in step S650. If it is determined in subsequent step S660 that the internal unbalance between sub- modules B.1 and B.2 has been sufficiently balanced (meaning that the internal SoC difference has become lower than the second threshold; S660: yes), processing proceeds to the situation illustrated in Fig. 4D by re-connecting energy storage sub-module B.1 and propulsion sub-module 2.2 (S670). As long as the opposite case is true (S660: no), balancing processing of steps S620 to S660 proceeds.

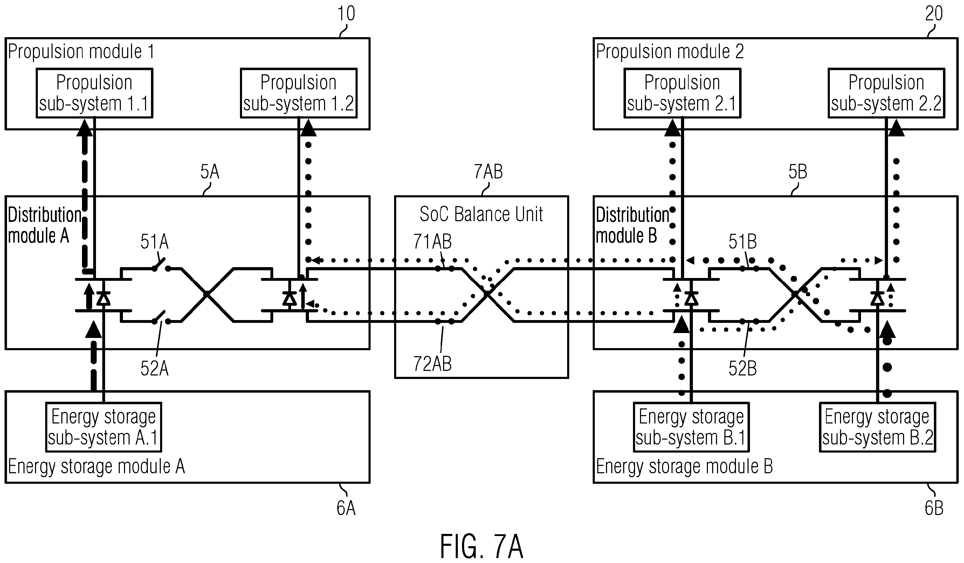

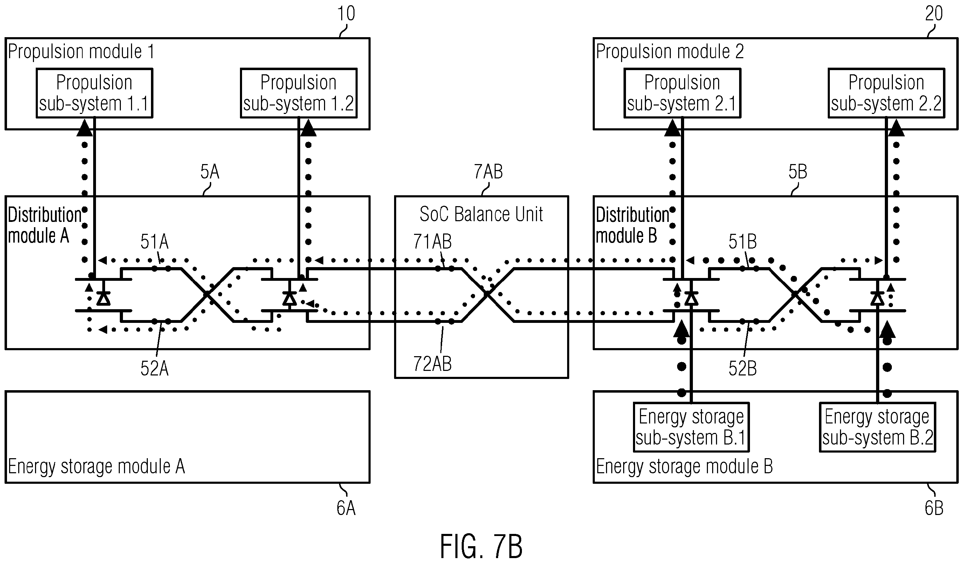

In the following, a use of the power distribution system according to the present invention for backup after failure of an energy storage module will be described with reference to the drawings of Figs. 7A and 7B. Again, for simplicity a system with two sub-networks is shown.

Fig. 7A illustrates the case where an energy storage module (in this example: energy storage module A) partially fails. More specifically, out of two energy storage sub-modules only a single one fails. In this case, both switches of the charge balancing unit 7AB are closed to thereby allow an energy power flow to the propulsion module 1 (10) from energy storage module B. At the same time, switch 52A is opened in power distribution module A. Thereby, the segregation is kept but now between one sub-module on one side and three sub-modules on the other side. Moreover, the power flow distribution is balanced and under control, when a connection between the sub module A.1 and the two sub-modules of B would lead, in case of SoC of ESS module A higher than the SoC of ESS module B, to the power flow supplied by module A being multiplied by 3, which is counterproductive from the perspective of A/C range management. At the same time, a direct power flow from energy storage module B to energy storage module A, i.e. between the energy storage modules, is prevented in accordance with the principles of the present invention. The failing energy storage sub-module (A.2, not illustrated in the present drawing) is disconnected.

Fig. 7B illustrates the case where energy storage module A has completely failed. In that case, failing energy storage module A is completely disconnected so that any power flow between the energy storage modules is prevented, whereas all switches within the power distribution modules and the charge balancing module are closed. Hence, a complete backup of the failing energy storage module A is achieved by enabling power flow from energy storage module B (6B) to propulsion module 1 (10).

Thus, the modular design of the power distribution system according to the present invention enables both keeping a level of segregation even when operating the balance of state of charge and also providing redundancy of the power supply of every propulsion sub-system from two electrical storage sub-systems. In other words, the proposed solution brings compatibility between energy resource sharing and balancing, as well as between electrical network segregation and power supply redundancy.

In summary, the present invention relates to a power distribution system for an electric aircraft having an electrical network with plural sub-networks each including energy storage modules and propulsion modules. Two of the sub-networks may be connected at any time for reasons of charge balancing, while preventing a direct energy flow between energy storage modules included in different sub-networks. In addition, the connection between different sub-networks may be used to compensate for failure in an energy storage module.

## Claims

1. A power distribution system for an aircraft with electrical propulsion for achieving charge balancing between energy storage modules (6A, 6B, 6C) of an energy storage system simultaneously with power supply to the propulsion engines of the aircraft, the system comprising:
at least two power distribution modules (5A, 5B, 5C), each power distribution module being configured for establishing a switchable connection between a corresponding one of at least two energy storage modules (6A, 6B, 6C) and a corresponding one of at least two propulsion modules (10, 20, 30) via the power distribution module (5A, 5B, 5C), so that there is a unique correspondence between a power distribution module (5A; 5B; 5C), an energy storage module (6A; 6B; 6C) and a propulsion module (10; 20; 30), respectively, the propulsion modules (10, 20, 30) including the propulsion engines,
at least two monitor devices corresponding to the at least two power distribution modules (5A; 5B; 5C), respectively, for monitoring a state of charge of the corresponding energy storage module (6A; 6B; 6C),
at least one charge balancing module (7AB, 7BC, 7CA) for establishing a switchable connection between two power distribution modules associated with the charge balancing module (7AB, 7BC, 7CA), wherein each charge balancing module (7AB, 7BC, 7CA) is associated with exactly two power distribution modules, and
a network management device communicatively coupled to said monitor devices, for controlling said power distribution modules (5A, 5B, 5C) and said charge balancing modules (7AB, 7BC, 7CA) to connect and disconnect the respective switchable connections,
wherein the network management device is configured to, in a case of a difference of state of charge between two energy storage modules (6A, 6B) corresponding to two power distribution modules (5A, 5B) associated with a common charge balancing module (7AB) exceeding a predetermined threshold, control the two power distribution modules (5A, 5B) and the associated charge balancing module (7AB) in such a way that power supply from the energy storage module (6A) having the higher state of charge to the propulsion module (20) corresponding to the energy storage module (6B) having the lower state of charge is enabled, but a direct power flow from the energy storage module (6A) with the higher state of charge to the energy storage module (6B) with the lower state of charge is prevented.

2. A system according to claim 1, wherein the network management device is further configured to control a charge balancing module (7AB) and the two associated power distribution modules (5A, 5B) so as to enable uninterrupted power supply to both the corresponding propulsion modules (10, 20) from the energy storage module (6B) corresponding to one (5B) of the power distribution modules if there is a failure in the energy storage module (6A) corresponding to the other power distribution module (5A).

3. A system according to claim 1 or 2, wherein all power distribution modules (5A, 5B, 5C) are normally disconnected, unless a state of charge balancing becomes necessary between two energy storage modules due to the state of charge difference exceeding the predetermined threshold or an energy storage module fails.

4. A system according to any of claims 1 to 3, wherein the control of the power distribution modules (5A, 5B) and the associated charge balancing module (7AB) for enabling power supply from a first energy storage module (6A) having a higher state of charge to the propulsion module (20) corresponding to a second energy storage module (6B) having the lower state of charge leads to charge balancing between the two energy storage modules (6A, 6B) without active control, by increasing the power flow from the first energy storage module (6A) and decreasing the power flow from the second energy storage module (6B).

5. A system according to any of claims 1 to 4, comprising at least three power distribution modules (5A, 5B, 5C), wherein no more than two power distribution modules are connected at any time.

6. A system according to claim 5, wherein, after connecting two power distribution modules (6A, 6B) by the associated charge balancing module (7AB) for state of charge balancing, the network management device controls the associated charge balancing module (7AB) to disconnect the connection between the power distribution modules (5A, 5B) as soon as sufficient state of charge balancing between the corresponding energy storage modules (6A, 6B) is achieved, in order to enable charge balancing between two other energy storage modules.

7. A system according to any of claims 1 to 6, wherein a propulsion module (10; 20; 30) comprises plural propulsion sub-modules (11, 12; 21, 22; 31, 32) and the corresponding power distribution module (5A; 5B; 5C) is further configured to receive power regenerated by a propulsion sub-module (11, 12; 21, 22; 31, 32) and to redistribute the regenerated power to another propulsion sub-module (11, 12; 21, 22; 31, 32) that still consumes power.

8. A system according to any of claims 1 to 7, wherein the power distribution modules (5A; 5B) are further configured to receive power regenerated by the corresponding propulsion module (10; 20) and the network management device is further configured to supply the regenerated power to another propulsion module (20; 10) and/or energy storage module (6B; 6A) corresponding to another power distribution module (5B; 5A), in case the two power distribution modules (5A, 5B) are connected by an associated charge balancing module (7AB).

9. A system according to any of claims 1 to 8, wherein a power distribution module (5A; 5B; 5C) comprises an electrical device such as a diode for allowing power flow only in a single direction and a plurality of switches (51A, 52A; 51B, 52B) for connecting and disconnecting branches of the aircraft electrical network, in particular the corresponding energy storage module (6A; 6B, 6C) and propulsion module (10; 20; 30).

10. A system according to any of claims 1 to 9, wherein a charge balancing module (7AB) comprises a plurality of switches (71AB, 72AB) for connecting branches of the aircraft electrical network including the associated power distribution modules (5A; 5B).

11. A system according to any of claims 1 to 10, wherein
an energy storage module (6A; 6B; 6C) includes plural energy storage sub-modules (61A, 62A; 61B, 62B; 61C, 62C),
the corresponding monitor device is further adapted to monitor a state of charge of the individual energy storage sub-modules (61A, 62A; 61B, 62B; 61C, 62C), and
the corresponding power distribution module (5A; 5B; 5C; 5D) is further configured to, upon receiving information from the corresponding monitor device that a state of charge difference between two energy storage sub-modules (61B, 62B) of one energy storage module (6B) exceeds a predetermined threshold, perform charge balancing between the two energy storage sub-modules (61B, 62B), by supplying more power from the energy storage sub-module (61B) with the higher state of charge than from the energy storage sub-module (62B) with the lower state of charge.

12. A system according to claim 11, wherein
the corresponding propulsion module (20) further comprises a plurality of propulsion sub-modules (21, 22), and
for achieving the charge balancing between the energy storage sub-modules (61B, 62B), the power distribution module (5B) is controlled to inhibit power flow from the energy storage sub-module (61B) with the lower state of charge to a part of the propulsion sub-modules (22).

13. An aircraft electrical network including
a power distribution system according to any of claims 1 to 12,
said at least two energy storage modules (6A, 6B, 6C), and
said at least two propulsion modules (10, 20, 30).

14. An aircraft comprising an aircraft electrical network according to claim 13.

15. A power distribution method for a power distribution system of an aircraft with electrical propulsion for achieving charge balancing between energy storage modules (6A, 6B, 6C) of an energy storage system simultaneously with power supply to the propulsion engines of the aircraft, the power distribution system including at least two power distribution modules (5A, 5B, 5C), each power distribution module (5A; 5B; 5C) being configured for establishing a switchable connection between a corresponding one of at least two energy storage modules (6A; 6B; 6C) and a corresponding one of at least two propulsion modules (10; 20; 30) via the power distribution module (5A; 5B; 5C), so that there is a unique correspondence between a power distribution module (5A; 5B; 5C), an energy storage module (6A, 6B, 6C) and a propulsion module (10; 20; 30), respectively, the propulsion modules (10; 20; 30; 40) including the propulsion engines and at least one charge balancing module (7AB, 7BC, 7CA) for establishing a switchable connection between two power distribution modules associated with the charge balancing module, wherein each charge balancing module is associated with exactly two power distribution modules, the method comprising the steps of
monitoring (S300, S440, S540) a state of charge of the energy storage modules (6A, 6B, 6C), and
controlling (S410, S510) said power distribution modules and said charge balancing modules in such a way that, in a case of a difference of state of charge between two energy storage modules (6A, 6B; 6B, 6C) corresponding to two power distribution modules (5A, 5B; 5B, 5C) associated with a common charge balancing module (7AB; 7BC) exceeding a predetermined threshold, power supply from the energy storage module (6A; 6C) having the higher state of charge to the propulsion module (20) corresponding to the energy storage module (6B) having the lower state of charge is enabled, but a direct power flow from the energy storage module (6A; 6C) with the higher state of charge to the energy storage module (6B) with the lower state of charge is prevented.
